# EUROPEAN PATENT APPLICATION

(11) **EP 2 146 478 A2**
(43) Date of publication of application: **20.01.2010**
(21) Application number: 08253108.8
(22) Date of filing: 23.09.2008
(51) Int. Cl.: H04L 29/06

(54) **Control of website usage via online storage of restricted authentication credentials**

(30) Priority: 17.07.2008 US 175322
(71) Applicant: Symantec Corporation, Cupertino CA 95014 (US)
(72) Inventor: Newstadt, Keith, Cupertino, CA 95014 (US); Cooley, Shaun P., Cupertino, CA 95014 (US)
(74) Representative: Gosnall, Toby

(57) **Abstract**

A client communicates with a website usage server via a network to gain access to an account on a website. The client requests an indication of whether user access to the account on the website is permitted. The website usage server determines whether website usage is permitted based at least in part on a website usage policy associated with the website and the user. The website usage server provides restricted authentication credentials to the website responsive to determining that access to the account is permitted.

## Description

### Background of the Invention

### 1. Field of Art

The disclosure generally relates to the field of website usage and in particular to controlling access to websites.

### 2. Description of the Related Art

The typical internet user generally has unlimited access to a variety of websites. Because of this unlimited access, the internet user may spend a tremendous amount of time browsing websites. While it may be fine for some users to spend their day browsing websites, there are situations when it is desirable to limit user access to websites.

For example, a school might desire to limit access to certain websites such as social networking websites to ensure that children are learning while they are at school and not socializing with friends online. Likewise, employees at a corporation may have their access to certain websites limited to ensure that the employees are being as efficient and productive as possible while they are at work.

Current website access control applications are typically installed on a single computer and allow a system administrator, such as a child's parent, to control user access to websites while the user is using that computer. However, such applications have limited control over a user's access to websites because the applications are only capable of controlling user access to websites on the particular machine in which the application is installed. As many internet users have access to more than one computer, the user can circumvent the access controls by using a different computer.

Accordingly, there is a need for a method to control a user's access to websites regardless of the computer that the user is currently using.

### Brief Summary

The above and other problems are addressed by a method, computer-implemented system, and a computer program product that controls user access of websites regardless of the computer that the user is currently using to browse the websites. One embodiment of the method receives from a client a request to access an account associated with a user of a website. The method identifies a website usage policy associated with the website and the user. The method further determines whether access to the account is permitted based at least in part on the website usage policy. Responsive to determining that access to the account is permitted based at least in part on the website usage policy, the method provides restricted authentication credentials associated with the user and the website to the client.

Embodiments of the computer-implemented system comprise a computer processor and a computer-readable storage medium storing computer program modules configured to execute on the computer processor. The computer program modules comprise a policy definition module configured to define a website usage policy associated with a user of a website. The computer program modules further comprise a policy database configured to store the website usage policy. Additionally, the computer program modules comprise a credentials database configured to store restricted authentication credentials for an account associated with the user and the website. The computer program modules further comprise a determination module configured to receive from a client a request to access an account associated with the user of the website. The determination module further determines whether access to the account is permitted based at least in part on the website usage policy. Responsive to determining that access to the account is permitted based at least in part on the website usage policy, the determination modules provides the restricted authentication credentials associated with the user and the website to the client.

Embodiments of the computer program product have a computer-readable storage medium storing computer-executable code for controlling user access to websites from a client, the code comprising a monitoring module configured to detect a user request to access an account on a website. The monitoring module requests from a website usage server an indication of whether a website usage policy permits the user to access the account on the website and receives from the website usage server restricted authentication credentials for the account responsive to the website usage server determining that the website usage policy permits access to the account. The code further comprises an enforcement module configured to enforce the website usage policy associated with the website, the enforcement module comprising a login module configured to provide the received restricted authentication credentials to the website.

### Brief Description of Drawings

FIG. 1 is a high-level block diagram of a computing environment according to one embodiment.
FIG. 2 is a high-level block diagram illustrating a typical computer for use as a website usage server, client, and or/web server providing a website.
FIG. 3 is a high-level block diagram illustrating a detailed view of the website usage server according to one embodiment.
FIG. 4 is a high-level block diagram illustrating a detailed view of a control module according to one embodiment.
FIG. 5 is a flowchart illustrating steps performed by the control module to control user access to a website.
FIG. 6 is a flowchart illustrating steps performed by the website usage server to control user access to a website.

The figures depict an embodiment of the present invention for purposes of illustration only. One skilled in the art will readily recognize from the following description that alternative embodiments of the structures and methods illustrated herein may be employed without departing from the principles of the invention described herein.

### Detailed Description

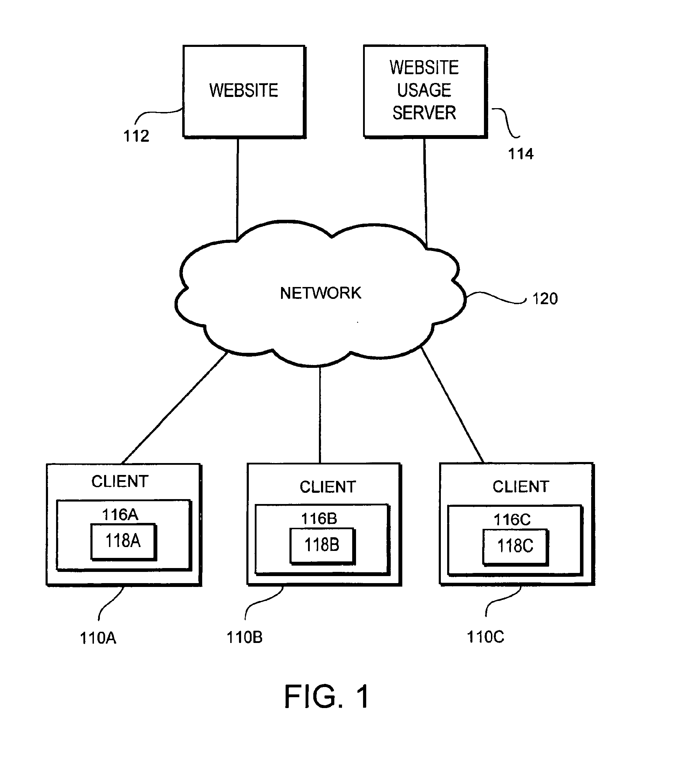

FIG. 1 is a high-level block diagram of a computing environment 100 according to one embodiment. FIG. 1 illustrates three clients 110 connected to a website 112 and a website usage server 114 by a network 120. Only three clients 110 and one website 112 are shown in FIG. 1 in order to simplify and clarify the description. Embodiments of the computing environment 100 can have thousands or millions of clients 110 and/or websites 112 connected to the network 120. For ease of description, the illustrated "website" can represent either a single website or multiple websites.

FIG. 1 and the other figures use like reference numerals to identify like elements. A letter after a reference numeral, such as "110A," indicates that the text refers specifically to the element having that particular reference numeral. A reference numeral in the text without a following letter, such as "110," refers to any or all of the elements in the figures bearing that reference numeral (e.g., "110" in the text refers to reference numerals "110A," "110B," and/or "110C" in the figures).

Generally, a website 112 includes a collection of one or more web pages stored on a web server. The illustrated website 112 represents the various websites available on the network 120. For example, the website 112 may be a social networking website where users interact with one another, a video entertainment website where users watch videos, or a sports website related to different sport topics. Users can have accounts on the website 112. A user logs into (i.e., authenticates) his or her account in order to access the services provided by the website 112. In order to login, the user must provide authentication credentials such as a username and password. Without these credentials, the user might be able to access only a limited set of services provided by the website 112.
A client 110 is used by a user to access (browse) the websites 112 on the network 120. The client 110, for example, can be a personal computer, a personal digital assistant (PDA), or a mobile telephone. In one embodiment, the user's access to the websites 112 is controlled by a website usage administrator (the "administrator"). In one example, the user is a child and the administrator is the child's parent. In another example, the user is an employee of a company or other member of an enterprise and the administrator is the user's supervisor. Similarly, the user can be a student and the administrator a teacher.

In one embodiment, the client 110 executes a web browser 116 such as MICROSOFT INTERNET EXPLORER that allows the user to retrieve and display web pages and other content from the websites 112 on the network 120. The client 110 executes a control module 118 that restricts the user's access to the websites according to a website usage policy established by the user's administrator. For example, the control module 118 can be a browser plug-in, a browser helper object (BHO), a standalone application, part of another application, or incorporated into the operating system.

The website usage server 114 stores website usage policies established by administrators and provides the policies and associated information to control modules 118 of clients 110. A website usage policy is a set of website access parameters that control a user's access to a restricted website 112. A website usage policy can specify restrictions based on time, number of discrete accesses, and/or a combination of these criteria or other criteria. For example, a policy can state time intervals when access is allowed, an allowed total time of access, and/or a total number of discrete accesses allowed within a given time interval. A given policy can be associated with one or more users and/or one or more websites 112.

In one embodiment, access to restricted websites 112 is controlled by preventing the user from knowing some or all of the authentication credentials for a website 112. The credentials not known to the user are referred to as the "restricted credentials." For example, the password for the user's account at a website 112 can be restricted. Therefore, the user is unable to log into the account without knowing the restricted credentials.

The website usage server 114 stores the restricted credentials. When the user uses the browser 116 to access a restricted website 112, the control module 118 contacts the website usage server 114 and determines whether access is permitted according to the website's usage policy. If access is permitted, the website usage server 114 and control module 118 act to log the user into the website 112 using the restricted credentials. In addition, once the user leaves the website, either voluntarily or based on the usage policy, the usage server 114 and control module 118 act to remove any information stored at the client 110 that the user might use to learn the restricted credentials, such as cookies.

Storing website usage policies and restricted credentials on the website usage server 114 thus allows control over user access to websites 112 regardless of where the user is located. The user can be using a client 110 at home, at school, at a friend's home, or at any other location and the user must interact with the website usage server 114 in order to gain access to a restricted website 112.

The network 120 represents the communication pathways between the clients 110, website usage server 114 and websites 112. In one embodiment, the network 120 is the Internet. The network 120 can also utilize dedicated or private communication links that are not necessarily part of the Internet. In one embodiment, the network 120 uses standard communications technologies and/or protocols. Thus, the network 120 can include links using technologies such as Ethernet, 802.11, integrated services digital network (ISDN), digital subscriber line (DSL), asynchronous transfer mode (ATM), etc. Similarly, the networking protocols used on the network 120 can include the transmission control protocol/Internet protocol (TCP/IP), the hypertext transport protocol (HTTP), the simple mail transfer protocol (SMTP), the file transfer protocol (FTP), etc. The data exchanged over the network 120 can be represented using technologies and/or formats including the hypertext markup language (HTML), the extensible markup language (XML), etc. In addition, all or some of links can be encrypted using conventional encryption technologies such as the secure sockets layer (SSL), Secure HTTP and/or virtual private networks (VPNs). In another embodiment, the entities can use custom and/or dedicated data communications technologies instead of, or in addition to, the ones described above.

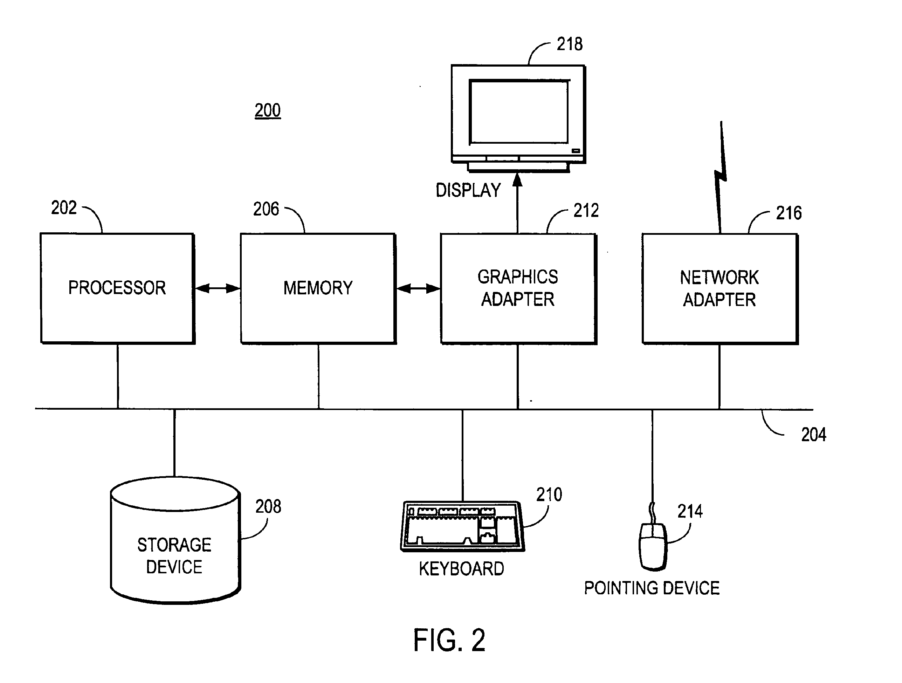

FIG. 2 is a high-level block diagram illustrating a typical computer 200 for use as a website usage server 114, client 110, and/or web server providing a website 112. Illustrated are a processor 202 coupled to a bus 204. Also coupled to the bus 204 are a memory 206, a storage device 208, a keyboard 210, a graphics adapter 212, a pointing device 214, and a network adapter 216. A display 218 is coupled to the graphics adapter 212.

The processor 202 may be any general-purpose processor such as an INTEL x86 compatible-CPU. The storage device 208 is, in one embodiment, a hard disk drive but can also be any other device capable of storing data, such as a writeable compact disk (CD) or DVD, or a solid-state memory device. The memory 206 may be, for example, firmware, read-only memory (ROM), non-volatile random access memory (NVRAM), and/or RAM, and holds instructions and data used by the processor 202. The pointing device 214 may be a mouse, track ball, or other type of pointing device, and is used in combination with the keyboard 210 to input data into the computer 200. The graphics adapter 212 displays images and other information on the display 218. The network adapter 216 couples the computer 200 to the network 120.

As is known in the art, the computer 200 is adapted to execute computer program modules. As used herein, the term "module" refers to computer program logic and/or data for providing the specified functionality. A module can be implemented in hardware, firmware, and/or software. In one embodiment, the modules are stored on the storage device 208, loaded into the memory 206, and executed by the processor 202.

The types of computers 200 utilized by the entities of FIG. 1 can vary depending upon the embodiment and the processing power utilized by the entity. For example, a client 110 that is a mobile telephone typically has limited processing power, a small display 218, and might lack a pointing device 214. The website usage server 114, in contrast, may comprise multiple blade servers working together to provide the functionality described herein.

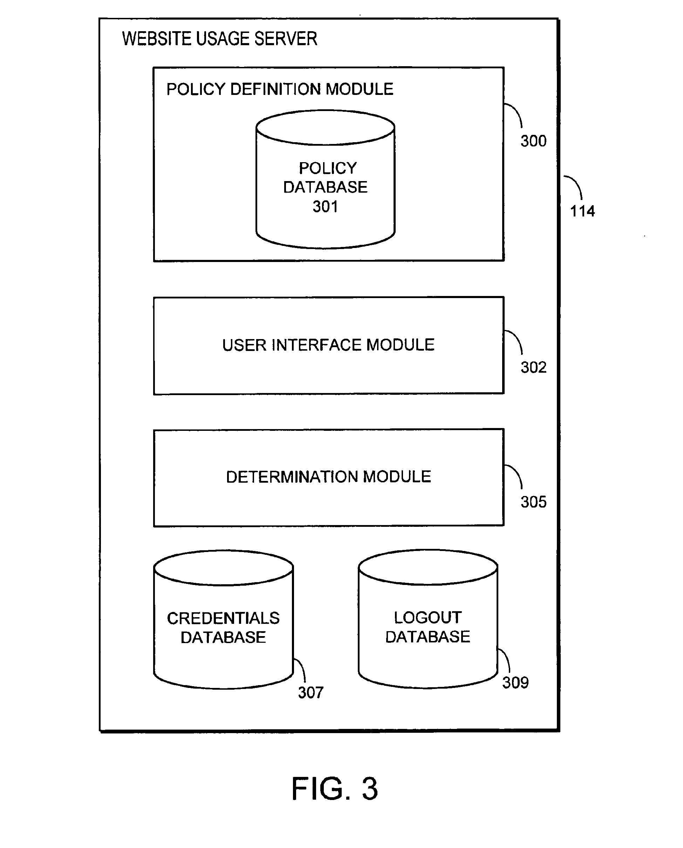

FIG. 3 is a high-level block diagram illustrating a detailed view of the website usage server 114 according to one embodiment. As shown in FIG. 3, the website usage server 114 includes multiple modules. Other embodiments of the website usage server 114 can have different and/or other modules than the ones described here, and the functionalities can be distributed among the modules in a different manner.

A policy definition module 300 defines website usage policies associated with users and websites 112. As mentioned above, a website usage policy specifies a user's terms of access to one or more restricted websites 112. The policy can restrict access to the web site 112 based on time by specifying times when access is allowed or not allowed. For example, the website usage policy may indicate that the user is only allowed access to a website 112 on weekends between the hours of 1:00 P.M. and 5:00 P.M. and/or on weekdays between the hours of 7:00 P.M. and 8:00 P.M.

In addition, the policy can restrict access based on a total time of allowed access. The total time of allowed access indicates an allotted time in which the user is allowed access to the website 112. For example, the website usage policy may indicate that the user may access the website 112 for only two hours each day or that the user may access the website 112 for only two hours during weekdays and an unlimited amount of time on weekends.

The policy can also restrict access based on a number of allowed accesses. The number of allowed accesses indicates the number of discrete times that a user is allowed access to a website 112. For example, the website usage policy may specify that a user is only allowed to access a website 112 a total of three times per day or seven times per week. The website usage policy can also restrict access based on a combination of these criteria. For example, a website usage policy may indicate that a user can only access a website 112 on the weekdays between 5 P.M. and 9 P.M. but only for a total allotted time of two hours.

In a further embodiment, a website usage policy may specify restricted web pages on a website 112 which the user is not allowed to access. The policy can identify specific pages and/or characteristics of pages that the user cannot access. For example, the policy can specify that the user is not allowed to access the specific pages on the website 112 that displays or allows the user to change the restricted authentication credentials. Likewise, the policy can specify certain terms that, when appearing on a page, should cause the page to be inaccessible to the user. In one embodiment, the policy definition module 300 includes a policy database 301 storing website usage policies established by administrators.

A credentials database 307 stores the users' restricted authentication credentials. In one embodiment, the restricted credential is the password. Thus, the restricted credentials database 307 stores the passwords for accounts at websites for users having associated website usage policies. Other restricted credentials are stored in other embodiments. In addition, unrestricted credentials such as usernames are also stored in the credentials database 307 in one embodiment.

A user interface (UI) module 302 allows a user and/or administrator to interact with the website usage server 114. In one embodiment, the UI module 302 includes a web server that serves one or more web pages.

These pages allow performance of functions such as designating websites and users to which usage policies pertain, establishing website usage policies for websites and users, viewing and editing restricted and unrestricted authentication credentials, etc. For example, the website usage administrator may use the UI provided by the UI module 302 to perform actions such as identifying a user to which a usage policy applies, identifying the restricted websites for that user, and supplying the authentication credentials for the restricted websites.

In one embodiment, neither the website usage administrator nor the user knows the restricted authentication credentials for a website 112. In such an embodiment, the administrator can use the UI module 302 to generate and store the restricted credentials. These credentials are supplied to the website 112 when the new account is established, or through a credential-changing process, so that the user's authentication credentials include the credentials generated by the website usage server 114.

A logout database 309 stores data describing logout mechanisms for websites 112. Logout mechanisms are techniques and related information for logging a user out of an account on a website 112. Thus, the logout mechanisms can include references to particular web pages of websites involved in the logging out of a user. In addition, the logout mechanisms can specify data cleanup actions to perform when a user is logged out of an account, such as identities and/or descriptions of cookies stored by the user's browser to delete upon logout. The data cleanup actions can prevent the user from examining residual data on the client 110 in order to learn the restricted authentication credentials. In one embodiment, the information in the logout database 309 is provided and maintained by a system administrator of the website usage server 114.

A determination module 305 determines whether a policy allows a user to access a given website. In one embodiment, the determination module 305 receives a request from a control module 118 at a client 110 for restricted authentication credentials in order to allow the client's user to access a website 112. The determination module 305 identifies the applicable policy in the policy database 301 and evaluates the policy in view of variables such as the current time, amount and/or number of previous accesses, and the like. In one embodiment, the determination module 305 also stores information regarding past website usage by the user as may be necessary to evaluate the user's usage policy.

In one embodiment, responsive to the determination that website access is allowed, the determination module 305 communicates the user's restricted authentication credentials from the credentials database 307 to control module 118 so that the user may login to an account at the website 112. In one embodiment, responsive to the determination that the website usage is denied according to the website usage policy associated with the website 112, the determination module 305 provides an error message to the user's client 110. The error message indicates the reason why access to the website has been denied. For example, the error message may state that the user is attempting to access the account on the website 112 during a time that is not allowed by the policy.

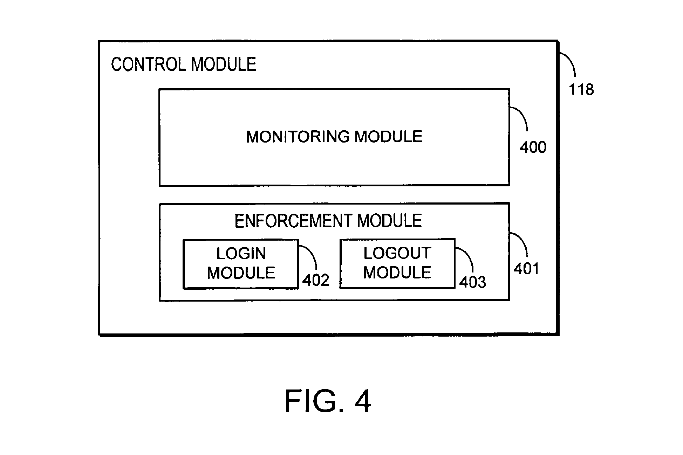

FIG. 4 is a high-level block diagram illustrating a detailed view of the control module 118 of a client 110 according to one embodiment. As shown in FIG. 4, the control module 118 includes multiple modules. Other embodiments of the control module 118 can have different and/or other modules than the ones described here, and the functionalities can be distributed among the modules in a different manner.

In one embodiment, the administrator installs the control module 118 at the client 110 before the user attempts to visit a restricted website 112. For example, the administrator can use the browser 116 to connect to the website usage server 114 and/or another server on the network 120 to download the control module 118 to the client 110. In this manner, the user can access a restricted website 112 from any client, provided that the administrator first installs the control module 118 on that client.

In one embodiment, the control module 118 obtains the identity of the user by, for example, querying the user. The control module 118 interacts with the website usage server 114 to identify websites 112 that are restricted for that user. A monitoring module 400 within the control module 118 monitors browser usage at the client 110. The monitoring module 400 detects indications that a user wants to log into an account on a restricted website 112. In one embodiment, the monitoring module 400 examines web pages that are downloaded from restricted websites 112 by the browser 116 to determine whether the web pages contain login forms. In one embodiment, the monitoring module 400 detects login forms by detecting certain keywords in the forms such as "username" and "password." In another embodiment, the monitoring module 400 includes a list of URLs of login forms for supported websites 112 and the module detects when the browser downloads a page from a listed URL.

Upon detecting an indication that a user wants to login to an account on a restricted website 112, the monitoring module 400 communicates with the website usage server 114 to determine whether the website usage policy for the user permits access to the website. In one embodiment, the monitoring module 400 provides the website usage server 114 with the identity of the user and the identity of the website that the user is accessing. In response, the monitoring module 400 receives either the restricted authentication credentials for the website (and optionally the unrestricted credentials) or an error message indicating that access to the website is denied. In addition, the monitoring module 400 receives information pertaining to the usage policy and/or the restricted website.

This information can include the conditions of access according to the policy, e.g., access is allowed for the next 90 minutes, and any logout mechanisms applicable to the restricted website.

If an error message is received, an embodiment of the monitoring module 400 displays the error message to the user to provide an explanation of why access to the website 112 was denied. For example, the error message may indicate to the user that the time in which the user is attempting to access the website 112 is not in compliance with the website usage policy.

The monitoring module 400 provides any received restricted authentication credentials to an enforcement module 401. The enforcement module 401 enforces the website usage policy by granting access when permitted by the policy and terminating previously-granted access when specified by the policy. For example, assume the website usage policy permits website usage prior to 7:00 P.M. and the user requests access at 6:30 P.M. The enforcement module 401 allows access for the first thirty minutes, and then terminates access at 7:00 PM.

In one embodiment, the enforcement module 401 includes a login module 402 for logging a user into a restricted website 112 when access is permitted by the website usage policy. The login module 402 uses the user's authentication credentials, including the restricted credentials, to automatically fill in the login form for the website 112. In one embodiment, the login module 402 fills in the login form in a manner that prevents the user from learning the restricted credentials. For example, the login module 402 may cause the restricted credentials to display as asterisks or as other characters that mask information from the user. Similarly, the login module 402 may interact with the browser 116 and provide the authentication credentials to the website 112 directly, without displaying the login form (or authentication credentials) to the user.

The enforcement module 401 further includes a logout module 403 for logging a user out of a restricted website 112 when access is not permitted by the website usage policy. In one embodiment, the logout module 403 implements the logout mechanisms for a website 112 when directed to do so by the enforcement module 401. Implementing the logout mechanisms can include causing the user's browser 116 to request the logout page from the restricted website, thereby effectively logging the user out of the website. Implementing the logout mechanisms can also include terminating the browser session and/or performing other actions that logout the user. In one embodiment, the logout module 403 performs cleanup actions associated with the restricted website upon logout, such as deleting all browser cookies associated with the website 112. The cleanup actions prevent the user from determining the restricted authentication credentials.

In one embodiment, the monitoring 400 and enforcement modules 401 interact to prevent the user from accessing restricted web pages on websites to which the user has gained access. The monitoring module 400 detects that the user is attempting to access a restricted web page and notifies the enforcement module 401. The enforcement module 401, in turn, blocks the browser 116 from displaying the restricted page and causes it to display an error message instead. In this manner, the modules prevent the user from accessing web pages that might display or allow the user to change the restricted authentication credentials.

In one embodiment, the monitoring module 400, enforcement module 401 and the website usage server 114 interact to allow the user and user's administrator to establish an account on a website 112. The monitoring module 400 detects that a webpage has been loaded for establishing a new account for a website 112 that is not known to the website usage server 114. In turn, the enforcement module 401 allows the browser 116 to display the web page. The user and the administrator may provide the necessary information to create the account except for the restricted credentials such as the password. In one embodiment, the website usage server 114 automatically generates and stores the restricted credentials at the request of the user and administrator to complete the registration process of the account. The generated restricted credentials can be kept secret from the user and administrator. Once the account has been created, the administrator may interact with the website usage server 114 to establish the website usage policy associated with the new account or to change the server-generated credentials.

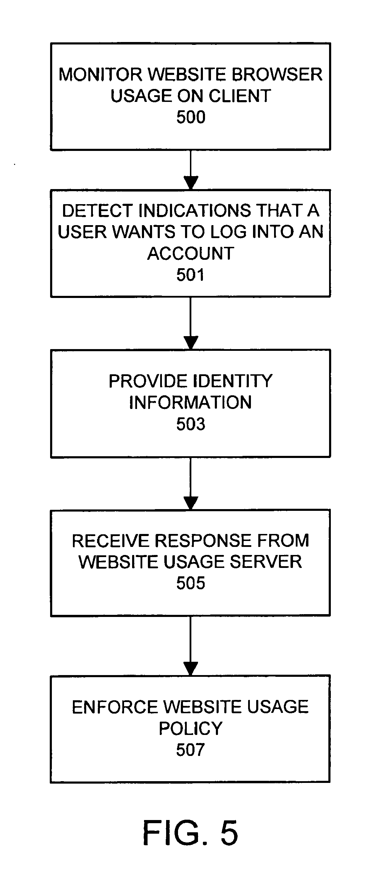

FIG. 5 is a flowchart illustrating steps performed by the control module 118 (FIG. 1) to control a user's website usage according to one embodiment. Other embodiments perform the illustrated steps in different orders, and/or perform different or additional steps. Moreover, some or all of the steps can be performed by entities other than the control module 118.

The control module 118 monitors 500 website browser usage on a client 110. The control module 118 detects 501 indications that a user wants to log into an account on a restricted website 112 from the browser usage. For example, the browser usage may indicate that the user has loaded a webpage with login forms indicating that the user wants access to an account on a website 112. The control module 118 provides 503 the website usage server 114 with identity information, such as the identity of the user and the identity of the restricted website 112 that the user is accessing, in order for the website usage server 114 to determine whether the user is allowed access to the restricted website according to a usage policy. Responsive to providing the identity information, the control module 118 receives a response 505 from the website usage server 114. In one embodiment, the control module 118 may receive the restricted authentication credentials for the website. Additionally, the control module 118 may receive conditions of access according to the website usage policy associated with the website. The control module 118 then enforces 507 the website usage policy. In one embodiment, the control module 118 enforces the website usage policy by granting access to the website 112 when permitted by the policy. The control module 118 may use the user's authentication credentials to automatically fill in the login form for the website 112 in a manner that prevents the user from learning the restricted credentials. In one embodiment, the control module 118 enforces the website usage policy by logging the user out of a restricted website 112 when access is no longer permitted by the website usage policy. An implementation of the control module 118 may provide an error message indicating that the user is not allowed to access the website 112.

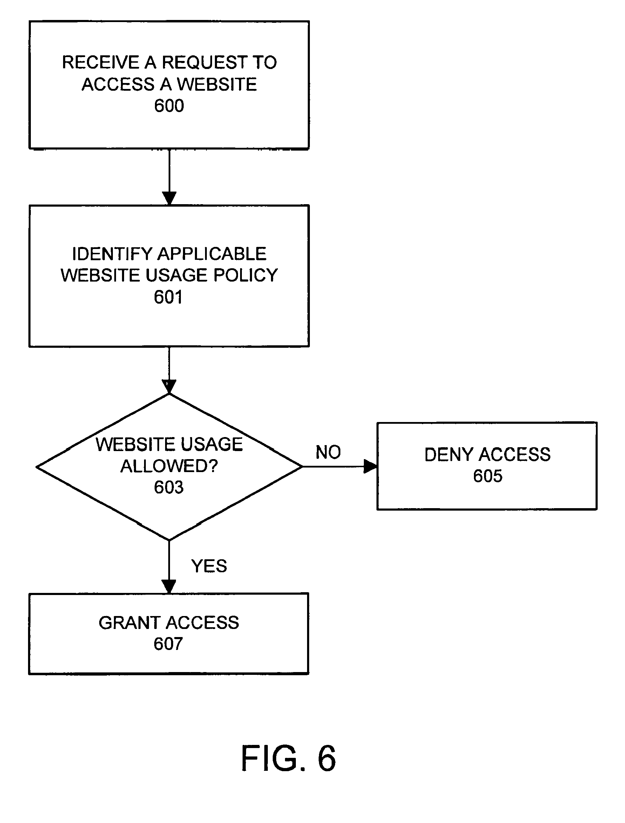

FIG. 6 is a flowchart illustrating steps performed by the website usage server 114 (FIG. 1) to control user access to a website 112 (FIG. 1) according to one embodiment. Other embodiments perform the illustrated steps in different orders, and/or perform different or additional steps. Moreover, some or all of the steps can be performed by entities other than the browser 116.

The website usage server 114 receives 600 a request to access a website 112 from the control module 118. In one embodiment, the website usage server 114 receives the identity of the user and the identity of the website 112 from the control module 118. The identity information is an indication that the control module 118 is requesting access to the website 112. The website usage server 114 identifies 601 the applicable website usage policy for the user and the website. The website usage server 114 determines 603 whether website usage is allowed according to the website usage policy. In one embodiment, the website usage server 114 evaluates the policy in view of variables such as current time or amount and/or number of previous accesses. For example, the website usage server 114 may determine the time of the request and compare the time to the allowed times of access specified in the website usage policy. Responsive to the website usage server 114 determining that website usage is allowed, the website usage server 114 grants 607 access to the website. In one embodiment, the website usage server 114 communicates the restricted authentication credentials, to the control module 118 to be auto-filled into the login forms of the website 112. Responsive to the website usage server 114 determining that website usage is not allowed, the website usage server 114 denies 605 access to the website 112. In one embodiment, the website usage server sends an error message to the browser 116 indicating why the user was denied access to the website 112.

The above description is included to illustrate the operation of certain embodiments and is not meant to limit the scope of the invention. The scope of the invention is to be limited only by the following claims. From the above discussion, many variations will be apparent to one skilled in the relevant art that would yet be encompassed by the scope of the invention. For example, in one embodiment, rather than the browser 116 automatically detecting that a user wants to access a website 112, the user may use the user interface provided by the website usage server 114 to manually request access to the website 112. The embodiments discussed above would then be applied to determine whether access to the website 112 should be granted.

## Claims

1. A computer-implemented method for controlling user access to websites, the method comprising:
receiving from a client a request to access an account associated with a user of a website;
identifying a website usage policy associated with the website and the user;
determining whether access to the account is permitted based at least in part on the website usage policy; and
responsive to determining that access to the account is permitted based at least in part on the website usage policy, providing restricted authentication credentials associated with the user and the website to the client.

2. The computer-implemented method of claim 1, wherein determining whether access to the account is permitted comprises:
identifying website usage parameters specified by the website usage policy; and
evaluating the website usage parameters to determine whether access to the account is permitted.

3. The computer-implemented method of claim 2, wherein the website usage parameters specify any one or more of the following:
i. times when user access to the account is permitted;
ii. an allotted time for which user access to the account is permitted; and
iii. a number of discrete times that user access to the account is permitted.

4. The computer-implemented method of any preceding claim, further comprising:
responsive to determining that access to the account is denied based at least in part on the website usage policy, providing an error message to the client.

5. The computer-implemented method of any preceding claim, wherein the restricted authentication credentials comprise a password to the account.

6. The computer-implemented method of any preceding claim further comprising:
responsive to determining that access to the account is permitted, determining logout mechanisms associated with the website, wherein the logout mechanisms comprise information for logging a user out of the account; and
providing the logout mechanisms to the client.

7. A computer program product having a computer-readable storage medium storing computer-executable code for controlling user access to websites from a client, the code comprising:
a monitoring module configured to:
detect a user request to access an account on a website;
request from a website usage server an indication of whether a website usage policy permits the user to access the account on the website; and
receive from the website usage server restricted authentication credentials for the account responsive to the website usage server determining that the website usage policy permits access to the account;
and
an enforcement module configured to enforce the website usage policy associated with the website, the enforcement module comprising a login module configured to provide the received restricted authentication credentials to the website.

8. The computer program product of claim 7, wherein the enforcement module further comprises a logout module configured to log the user out of the account on the website responsive to the website usage server determining that the website usage policy denies access to the account.

9. The computer program product of claim 8, wherein the logout module is further configured to perform any of the following;
i: log the user out of the account on the website by terminating a browser session or loading a logout webpage associated with the website at a time based at least in part on the website usage policy; and
ii: implement logout mechanisms for the website to prevent the user from determining the restricted authentication credentials.

10. The computer product of any of claims 7 to 9, wherein the enforcement module is further configured to perform data cleanup actions associated with the website responsive to the user ceasing to access the account.

11. The computer program product of any of claims 7 to 10, wherein the monitoring module receives an error message from the website usage server responsive to the website usage server determining that access to the account is denied.

12. The computer program product of any of claims 7 to 11, wherein the monitoring module is further configured to perform any of the following:
i. detect that the user is attempting to access a restricted web page associated with the restricted authentication credentials; and block access to the restricted web page; and
ii. automatically provide the restricted authentication credentials to the website in a manner that prevents the user from determining the authentication credentials.

13. A computer-implemented system for controlling user access to websites, the system comprising:
a computer processor; and
a computer-readable storage medium storing computer program modules configured to execute on the computer processor, the computer program modules comprising:
a policy definition module configured to define a website usage policy associated with a user of a website;
a policy database configured to store the website usage policy;
a credentials database configured to store restricted authentication credentials for an account associated with the user and the website; and
a determination module configured to:
receive from a client a request to access the account associated with the user of the website;
determine whether access to the account is permitted based at least in part on the website usage policy; and
responsive to determining that access to the account is permitted based at least in part on the website usage policy, provide the restricted authentication credentials for the account to the client.

14. The computer-implemented system of claim 13, wherein the determination module if further configured to:
identify website usage parameters specified by the website usage policy; and
evaluate the website usage parameters to determine whether access to the account is permitted; wherein evaluating the website usage parameters preferably comprises comparing times when user access to the account is permitted with a current time.

15. The computer-implemented system of claims 13 or 14, wherein the determination module is further configured to:
determine logout mechanisms associated with the website, wherein the logout mechanisms comprise information for logging a user out of the account responsive to determining that access to the account is permitted; and
provide the logout mechanisms to the client.
